# EUROPEAN PATENT APPLICATION

(11) **EP 2 489 502 A1**
(43) Date of publication of application: **22.08.2012**
(21) Application number: 12154140.3
(22) Date of filing: 07.02.2012
(51) Int. Cl.: B32B 3/08, B32B 3/12, B32B 17/06, E04F 13/14

(54) **Transparent structural element, in particular for floors**

(30) Priority: 15.02.2011 IT MI20110220
(71) Applicant: Politec Polimeri Tecnici S.A., 6855 Stabio (CH)
(72) Inventor: Conterno, Cosimo, 6850 MENDRISIO (CH)
(74) Representative: Giuli, Maurizio Mario Galdino

(57) **Abstract**

Transparent structural element (100), in particular for floors, of the sandwich panel type, comprising externally two glass coatings (101,102) and inside at least one transparent alveolar panel (10) in extruded thermoplastic material, said monolithic alveolar panel comprising at least two flat sides (13) parallel to each other, spaced and connected by a plurality of ribs (14) so as to define at least one layer of said alveolar panel, said ribs (14) having a non-parallel development with respect to a single straight directrix, said glass coatings (101,102) being stably and integrally constrained to said alveolar panel (10) by the interpositioning of a layer, continuous or non-continuous, of adhesive material (103).

## Description

The present invention relates to a transparent structural element, in particular for floors, but also suitable for producing vertical partitions, staircases, floating floors, footways and horizontal tread surfaces in general.

In addition the transparent structural element according to the present invention can also be used as an outer coating for buildings with a sunscreen functionality.

At present, the production of new structural elements, such as floors, vertical partitions, staircases, floating floors, footways or horizontal tread surfaces in general, are currently often requested, which more or less directly allow either the passage or a total or partial reflection of light.

Furthermore, interventions on already existing structures is required, in order to substitute at least a portion of the same with an element which, as indicated above, is transparent or translucent to allow the passage of light between the spaces separated by said structural element.

As is evident, however, for reasons of safety, these transparent structural elements must have the mechanical resistance requisites required for the function to be exerted.

In the case of a horizontal tread surface, for example, these transparent structural elements must have a high compression strength so as not be deformed by the passage of one or more users.

Sheet elements made of solid glass which are dimensioned so as to guarantee suitable mechanical performances, at the same time allowing the passage of light, are currently used.

Unfortunately, however, due to the necessary dimensioning indicated above, these glass sheets are often extremely heavy and consequently difficult to move and lay.

US4358490 teaches how to produce a transparent isolating sheet. This sheet is substantially constructed in two different ways.

The first embodiment discloses arranging two outer sheets of glass or similar material containing between each other, at least one latex network structure with perpendicular trellises joined to each other.

A second embodiment discloses positioning between outer transparent films, again latex sheets but this time honeycomb-shaped and arranged off-set with respect to each other.

It should firstly be noted that the structures thus created are not completely transparent as the latex network structure or honeycomb structure are not transparent. This internal structure therefore significantly reduces the transparent surface produced by the outer glass sheets. The surfaces facing the outside of the internal structures thus created are not completely flat and form a limited rest surface for the outer glass sheets.

Furthermore, the connection between glass and internal structure is only obtained along the contact edges of the structures and glass itself.

An objective of the present invention is to provide a transparent or translucent structural element, in particular for floors, capable of overcoming the drawbacks of the known art indicated above in an extremely simple, economical and particularly functional manner.

Another objective is to provide a transparent or translucent structural element, in particular for floors, which offers high mechanical performances which allows the passage of light and is much lighter than common solid glass sheets having the same mechanical characteristics.

These objectives according to the present invention are achieved by providing a structural element, in particular for floors, as specified in claim 1.

Further characteristics of the invention are indicated in the dependent claims.

The characteristics and advantages of a structural element, in particular for floors, according to the present invention will appear more evident from the following illustrative and non-limiting example, referring to the enclosed schematic drawings in which:
- figure 1 is a schematic view of a structural element, in particular for floors, according to the present invention;
- figure 2 is a schematic perspective view of the transparent alveolar panel incorporated in the structural element according to the present invention;
- figures 3 to 5 schematically show three possible transversal sections of a transparent alveolar panel incorporated in the structural element according to the present invention; and
- figures 6 and 7 are perspective views of partial cross-sectional details of additional transparent alveolar panels incorporated in the structural element according to the present invention.

With reference to the figures, these show with 100, an embodiment of a structural element, in particular for floors, according to the present invention, and with 10, a transparent alveolar panel incorporated in said structural element 100.

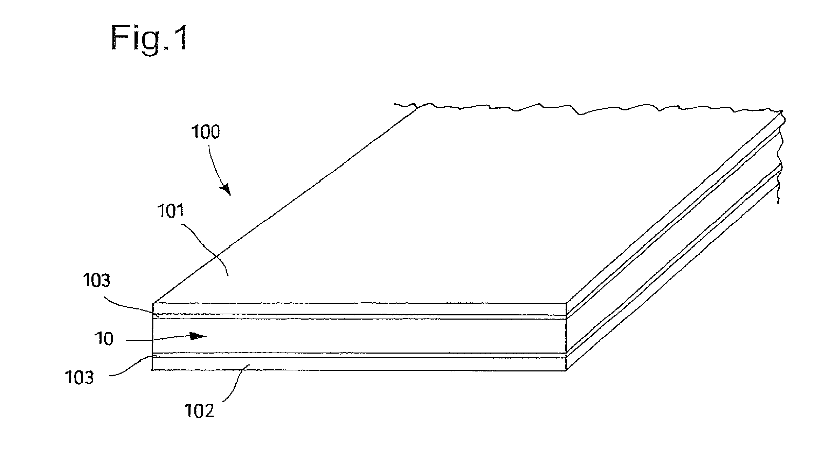

As shown extremely schematically in figure 1, the transparent structural element 100 according to the present invention is of the sandwich panel type externally comprising two glass coatings, for example in the form of an upper tread sheet 101 and a lower rest sheet 102, respectively, and internally at least one transparent alveolar panel 10 made of an extruded thermoplastic material.

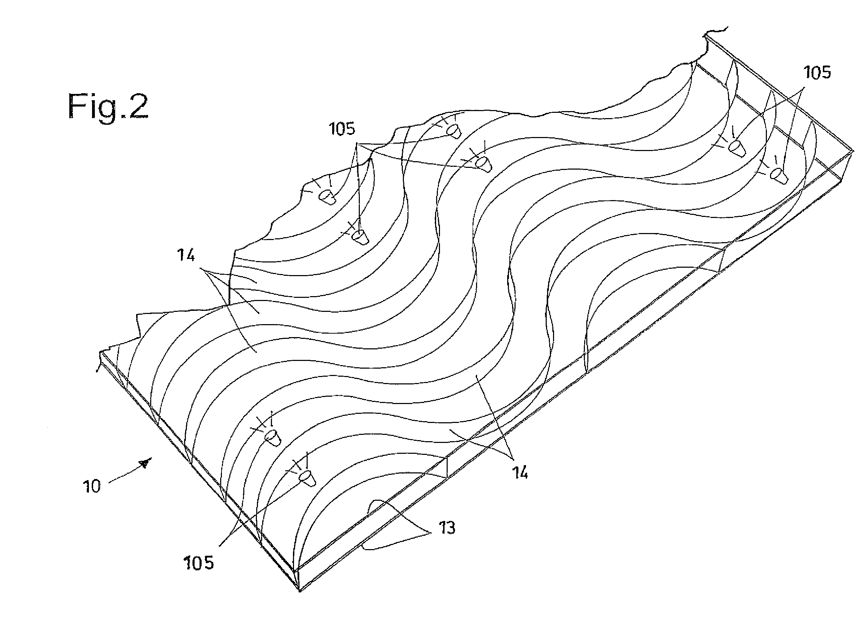

Said alveolar panel 10, which can be seen in an embodiment of figure 2, comprises at least two upper and lower sides 13 so as to define at least one layer of said panel, wherein said at least two sheets 13 are flat, parallel to each other, and spaced and connected by a plurality of ribs 14, which are also transparent.

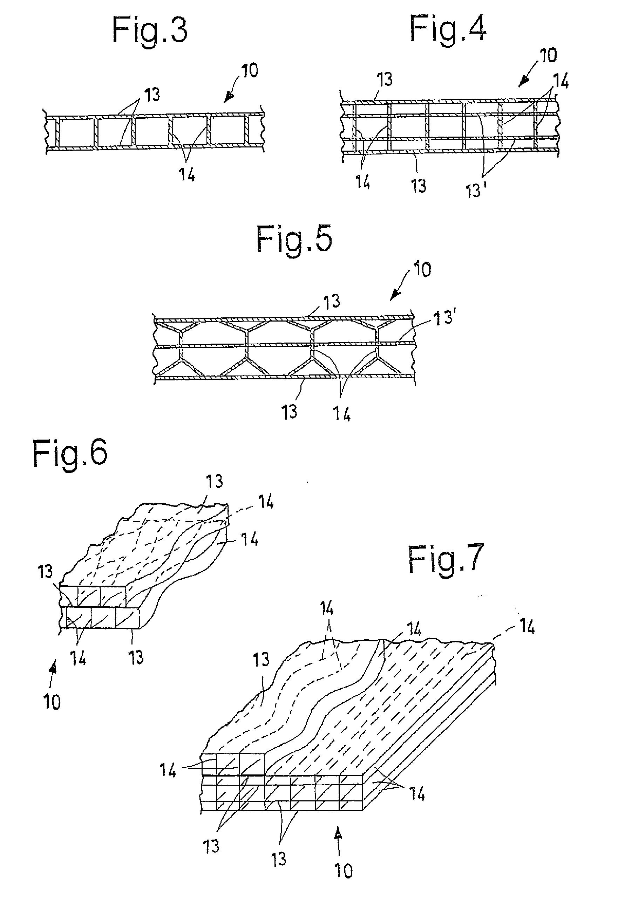

Figures 3 and 4 show embodiments with one and two layers respectively.

According to the invention, the ribs 14 have a development not defined by a single straight directrix.

According to a preferred example visible in figure 2, the transversal ribs 14 are parallel to each other and have an undulating transversal development.

According to another embodiment example, not shown, alternative to the previous embodiment, the ribs 14 are divided into a first series of substantially transversal ribs and a second series of substantially longitudinal ribs forming a network structure.

In this second hypothesis, the ribs can also have straight developments defined by two straight directrixes substantially orthogonal to each other.

The Applicant has in fact verified that both of the embodiments described above, having the common characteristic that the development of the ribs present is not defined by a single straight directrix, provide the structure with an optimum compression and flexural strength comparable to that of normal solid glass sheets.

Advantageously and surprisingly in the field of the production and processing of polycarbonate or other similar plastic materials, the above resistance properties conferred to the panel by the particular development of the ribs, allow coupling between the different components of the structural element 10, using a vacuum technology with temperatures up to 120°C, which is so far only typical of stratified glass couplings.

In figure 2, the transversal ribs 14 intersect the sides 13 at a right angle, however they could also be tilted with respect to these or shaped so as to form a honeycomb structure as can be seen in figure 5.

The embodiment of figure 1 shows only one panel 10, but according to the invention, the presence of other superimposed transparent alveolar panels can be envisaged, in order to obtain the required thicknesses and resistances, between the glass layers 101, 102, arranged with septa which are parallel or orthogonal or in any case tilted with respect to each other.

In this embodiment, these additional transparent alveolar panels can have undulating transversal ribs, as shown in figure 2, common straight ribs, or undulating longitudinal ribs forming a kind of network with superimposed surfaces.

The connection between the glass coatings 101, 102 and the alveolar panel 10 is obtained by the interpositioning of a continuous layer, as indicated in figure 1, but alternatively also non-continuous, of an adhesive material 103, also transparent.

In the case of a multilayered panel 10, the transversal ribs 14 of a first layer can have an undulating transversal development different from the undulating transversal development 14 of a second layer.

Alternatively, the transversal ribs 14 of a first layer can also be in an offset position with respect to the transversal ribs 14 of a second layer.

The synthetic thermoplastic material for producing the above panels 10 is preferably polycarbonate, PC, or polymethylmethacrylate, PMMA, obviously provided they are transparent.

The layers of adhesive material 103 must create a stable connection between the transparent alveolar panel 10 and the glass sheets 101, 102 and must maintain structural integrity with time and also under stress.

The layers of adhesive material 103 must also maintain the transparency of the structural element 100 and in no way jeopardize the properties of the transparent alveolar panel 10.

According to the invention, the layers of adhesive material 103 can be a layer of a hot melt adhesive, a reactive hot melt adhesive, a premixed bi-component or mono-component adhesive reactive to humidity, after UV irradiation, or after heat irradiation.

The layers of adhesive material 103 can be applied to both the glass sheets 101, 102 and also to the opposite sides 13 of the panel 10.

According to a particular embodiment, the application of the layers of adhesive material 103 can be effected independently of the assembly of the structural element 100 and, in particular, even some time after the joining of the glass sheets 101, 102 and the transparent alveolar panel 10.

In this case, the layer of adhesive material 103 can be of the thermally reactivatable type when joining the glass sheets 101, 102 to the transparent alveolar panel 10, for example by means of heating devices, such as irradiators of ultrasounds, microwaves, infrared rays, ultraviolet rays, heat or the like, suitable for generating a specific and controlled heating and/or irradiation of the surface of the adhesive.

The layers of adhesive material 103 can be applied in different ways, depending on the nature of the adhesive material.

In the case of hot melt adhesives, these can be applied to the sides 13 of the panel 10 by the co-extrusion of a layer of hot melt adhesive or by extrusion in a separate unit, i.e. not simultaneously, in the same head.

They can also be applied by means of the roll transfer technique, or by means of the racla system, spray system, or by means of dosage nozzles with the final part in the form of a spatula, either circular or with another geometrical function.

Except for co-extrusion alone, these techniques can also be used for both the application of reactive monocomponent adhesives, and also for UV reactivatable adhesives.

Premixed bi-component adhesives, on the other hand, can be applied by means of spread deposition or using nozzles, either circular, spatula or with another geometrical form, or spray nozzles.

The co-extrusion or extrusion, by means of a separate unit, of a hot melt adhesive on the panel 10 can be effected using the conventional flat head spreading system, which allows a uniform layer of hot melt adhesive to be distributed.

The layers of adhesive material 103 made of hot melt material, can be applied in continuous surface form, non-continuous form, for example with rows in specific areas.

This non-continuous co-extrusion or extrusion method allows a saving of material through specific application in the areas in which gluing between the glass sheets 101, 102 and the transparent alveolar panel 10, is envisaged and necessary.

As already mentioned, the application of a coating of hot melt adhesive on the opposite surfaces of the panel 10 can also be effected by means of a conventional roll transfer application system, or by means of the racla system, with nozzles or spraying. Analogously to what is described for co-extrusion, the layer of adhesive 103 in hot melt material applied with these systems, can also be effected non-continuously and limited to specific gluing areas.

The hot melt adhesives used for producing the layers of adhesive material 103 must satisfy the following requisites:
a) the chemical composition and application temperature of the adhesive must be such as to not damage the polymer of the panels, causing, for example, the deformation of the panel due to heat or corrosion of the surface on which it is applied;
b) once applied, the adhesive must guarantee an adequate and absolute transparency in the gluing areas;
c) the structure of the adhesive applied must remain as unaltered as possible with time, guaranteeing an adequate adhesion capacity and life;
d) the adhesive must not become opaque and/or yellow, remaining perfectly transparent;
e) upon joining the panel 10 to the glass sheets 101, 102, the hot melt adhesive must be able to be thermally reactivated, i.e. it must reacquire its adhesive properties, by heating.

The main types of hot melt adhesives that satisfy the requirements listed above are polyurethane-based adhesives, acrylic-based adhesives or new generation polyolefin-based adhesives, called "Amorphous Poly-alpha-olefins"- APAO, or "Amorphous Polyolefins"-APO or chemically equivalent.

Polyurethane-based adhesives comprise thermo-adhesive polyurethane polymers obtained by reaction between aliphatic isocyanates, such as hexamethylenediisocyanate-HDI and isophoronediisocyanate-IPDI, and polyols of the polyester, polyether type, polymers of caprolactone or polycarbonate.

Acrylic-based adhesives comprise mixtures of polymers, copolymers or terpolymers with acrylic functionalities. The formulations of acrylic-based adhesives can also comprise:
1) tackifiers, such as hydrogenated hydrocarbon resins, terpenephenolic resins and polyterpene resins;
2) structuring polymers such as polymethylmethacrylate-PMMA, methacrylate-butadiene-styrene copolymer - MBS, styrene-isoprene-styrene copolymer - SIS and styrene-butadiene-styrene copolymer.

If premixed bi-component adhesives are used, the application on the outer sides 13 of the panel 10 can be effected by means of spreading, using application nozzles of the adhesive, or a roll transfer application system. The bi-component adhesive is premixed before being introduced into the application means of the adhesive.

A bi-component adhesive obtained by the mixing of aliphatic OH-terminated urethane prepolymers in aqueous dispersion and blocked aliphatic isocyanates can be used as premixed bi-component adhesive. The aqueous dispersion obtained from the above mixing is applied to the outer sides of the panel 10 and subsequently dried, for example by means of hot air, a heat pump (dehumidifier), vacuum pump or similar systems. The drying can be effected in the production line by putting the panel in a heated aerated tunnel.

If a premixed bi-component adhesive is used, at the end of the application of the adhesive to the panel and subsequent drying, a protective film of a polyolefinic nature (PP, PE, etc.) is preferably applied to this to allow the panel thus obtained to be stored in a warehouse for a lengthy period of time.

The hot reactivation of this mixture at temperatures ranging from 60 to 160°C (by irradiation with ultrasounds, microwaves, infrared rays or heat or equivalent systems) allows the blocked isocyanates to be activated, triggering the polymerization reaction between prepolymers and isocyanate. The polymerization reaction produces the adhesive material.

Alternatively, a bi-component adhesive obtained by mixing an epoxy resin and an amine catalyst, can also be used. As known to experts in the field, by suitably selecting the type of epoxy resin and amine catalyst, the time necessary for completing the assembly of the components can be controlled. In this case, the components to be assembled must be glued within the pre-established time, which can vary from a few minutes to several hours. With this assembly procedure, an intermediate storage of the pre-spread panels, cannot be created, before assembly.

Analogously, the use of a reactive monocomponent adhesive, such as a polyurethane hygro-reactive adhesive, i.e. a polyurethane isocyanate-terminated with non-blocked isocyanate, does not allow storage and requires assembly of the components within a pre-established time limit.

Finally, according to alternative embodiments, the structural element 100 according to the present invention, can comprise lighting elements 105, schematically shown in figure 2 in the form of led, positioned inside the alveolar panel 10, whereas at least one of the glass coatings 101, 102 can comprise a reflecting and/or coloured surface in relation to the requirements.

The glass sheets can obviously also be of the chamber glass type filled, for decorative purposes, with various kinds of materials, such as for example, coloured glass pebbles, or other items, provided they are transparent.

It can thus be seen that a structural element, in particular for floors, according to the present invention, achieves the purposes indicated above.

The outer glass sheets, in fact, provide abrasion resistance from tread and resistance to external agents, whereas the internal polycarbonate sheet with a ribbed alveolar structure having a development not defined by a single straight directrix provides considerable compression strength, which contributes to lightening the whole structural element.

The transparent structural element according to the present invention therefore advantageously offers high mechanical performances, it allows the complete passage of light due to the total transparency and at the same time is much lighter than the common solid glass sheets used for the same function.

Said transparent structural element according to the present invention surpasses all the prior forms proposed that did not have transparency in general, as they required hardening and reinforcing elements made of a non-transparent material.

The structural element, in particular for floors, of the present invention thus conceived can undergo numerous modifications and variants, all included in the same inventive concept; furthermore, all the details can be substituted by technically equivalent elements. In practice, the materials used, as also their dimensions, can vary according to technical requirements.

## Claims

1. A transparent structural element (100), in particular for floors, of the sandwich panel type, comprising externally two glass coatings (101,102) and internally at least one alveolar panel (10), **characterized in that** said at least one alveolar panel is completely transparent (10) in an extruded thermoplastic material, and comprises at least two flat sides (13) parallel to each other, spaced and connected by a plurality of ribs (14) so as to define at least one layer of said alveolar panel, said ribs (14) having a non-parallel development with respect to a single straight directrix, said glass coatings (101,102) being stably and integrally constrained to said alveolar panel (10) by the interpositioning of a layer, continuous or non-continuous, of adhesive material (103), also transparent.

2. The structural element according to claim 1, **characterized in that** said ribs (14) are parallel to each other and have an undulating transversal development.

3. The structural element according to claim 1, **characterized in that** said ribs (14) comprise a first series of substantially transversal ribs and a second series of substantially longitudinal ribs creating a network structure.

4. The structural element according to any of the previous claims, **characterized in that** it comprises three or more of said flat parallel sides (13) defining at least two layers of said alveolar panel with ribs (14) intersecting said sides (13).

5. The structural element according to claim 4, **characterized in that** said ribs (14) of a first layer of said alveolar panel have a different development with respect to the development of ribs (14) of a second layer of said alveolar panel.

6. The structural element according to claim 4, **characterized in that** said transversal ribs (14) of a first layer are parallel but in an offset position with respect to said transversal ribs (14) of a second layer.

7. The structural element according to claim 1, **characterized in that** said synthetic thermoplastic material is polycarbonate.

8. The structural element according to any of the previous claims, **characterized in that** said layer of adhesive material (103) is a hot melt adhesive or a premixed bi-component adhesive or a reactive monocomponent adhesive.

9. The structural element according to any of the previous claims, **characterized in that** said layer of adhesive material (103) is co-extruded with said alveolar panel (10).

10. The structural element according to any of the previous claims, **characterized in that** said layer of adhesive material (103) is of the re-activatable type with ultrasounds and/or microwaves and/or infrared rays and/or heat immediately before being joined to said glass coatings (101, 102).

11. The structural element according to any of the previous claims, **characterized in that** it comprises lighting elements (105) positioned inside said alveolar panel (10).

12. The structural element according to any of the previous claims, **characterized in that** at least one of said glass coatings (101, 102) can comprise a reflecting surface.
